# EUROPÄISCHE PATENTSCHRIFT

(11) **EP 2 765 025 B1**
(45) Veröffentlichungstag und Bekanntmachung des Hinweises auf die Patenterteilung: **24.02.2016**
(21) Anmeldenummer: 14167227.9
(22) Anmeldetag: 29.04.2011
(51) Int. Cl.: B60N 2/427, B60N 2/02, B60N 2/42

(54) **Fahrzeugsitz**
VEHICLE SEAT
SIEGE DE VEHICULE

(30) Priorität: 28.07.2010 DE 102010032475; 28.07.2010 DE 102010032479; 28.07.2010 DE 102010032481; 28.07.2010 DE 102010032480
(43) Veröffentlichungstag der Anmeldung: 13.08.2014
(62) Teilanmeldung aus: 11721728.1
(73) Patentinhaber: Johnson Controls GmbH, 51399 Burscheid (DE)
(72) Erfinder: Huettemann, Volker, 42897 Remscheid (DE); Hartlaub, Silvio, 50259 Pulheim (DE); Subramanian, Velladurai, 76870 Kandel (DE)
(74) Vertreter: Finger, Catrin

(56) Entgegenhaltungen:
- EP-A1- 2 179 887
- EP-A1- 2 650 167
- WO-A1-2012/037218
- WO-A2-2008/017794
- DE-A1-102005 049 302
- DE-A1-102005 049 303
- FR-A1- 2 917 026
- FR-A1- 2 943 957

## Beschreibung

Die Erfindung betrifft einen Fahrzeugsitz mit einem Sitzteil und einer Rückenlehne sowie einen Fahrzeug mit einem derartigen Sitz.

Ein Fahrzeugsitz umfasst üblicherweise eine Rückenlehne zum Abstützen des Rückens eines auf dem Fahrzeugsitz in Normalposition sitzenden Fahrzeuginsassen. Die Rückenlehne ist mittels eines Verstellmechanismus relativ zum Sitzteil des Fahrzeugsitzes in eine für den Fahrzeuginsassen bequeme Position verstellbar. Die Rückenlehne kann darüber hinaus mit einer Kopfstütze, die starr oder relativ verschwenkbar zur Rückenlehne angeordnet ist, versehen sein.

Im Allgemeinen ist der Verstellmechanismus auf einer Grundplatte angeordnet, die mittels einer Verschraubung an dem Sitzteil befestigt ist. Die Grundplatte und das Sitzteil weisen üblicherweise jeweils mindestens zwei in nahezu horizontaler Ebene nebeneinander angeordnete Durchgangsöffnungen auf, in welche Befestigungsmittel eingreifen.

Bei Auffahrunfällen, bei denen ein Fahrzeug gegen das Heck eines stehenden oder eines langsamer fahrenden Fahrzeugs prallt, kommt es infolge der Trägheit der Fahrzeuginsassen in Bezug zum Fahrzeugsitz in den beteiligten Fahrzeugen zu einer Beschleunigung der Fahrzeuginsassen, infolgedessen es zu schweren Verletzungen der Halswirbelsäule (so genanntes Schleudertrauma) bei fehlender Abstützung des Kopfes kommen kann.

Aus dem Stand der Technik ist es bekannt, Kopfstützen vorzusehen, welche beispielsweise den Kopf bei seiner Rückwärtsbewegung abfangen sollen. Dabei kann es aufgrund der Elastizität der Kopfstütze oder deren Halterung zu einem Schwingen nach vorne und wieder nach hinten kommen. Dieser Rückprall ist unerwünscht.

Die DE 10 2005 049 303 A1 beschreibt einen Fahrzeugsitz, insbesondere Kraftfahrzeugsitz, mit einer Verstellvorrichtung zur Höhen- und/oder Neigungsverstellung einer Sitzstruktur relativ zu einem Sitzunterbau, wobei die Verstellvorrichtung wenigstens einen Lenker umfasst, der zur Durchführung der Höhen- und/oder Neigungsverstellung relativ zum Sitzunterbau und/oder relativ zur Sitzstruktur schwenkbar vorgesehen ist, wobei bei einer Höhen- und/oder Neigungsverstellung der Sitzstruktur relativ zum Sitzunterbau ein erstes Verriegelungsmittel an einem zweiten Verriegelungsmittel vorbeigleitend vorgesehen ist, wobei ein Hebel mit einem Befestigungsmittel fest, jedoch um eine Drehachse drehbar mit dem Sitzunterbau verbunden ist, wobei der Hebel zu einer Überlastverriegelung der Verstellvorrichtung das erste Verriegelungsmittel aufweist, wobei der Lenker oder die Sitzstruktur das zweite Verriegelungsmittel aufweist oder wobei ein Hebel mit einem Befestigungsmittel fest, jedoch um eine Drehachse drehbar mit der Sitzstruktur verbunden ist, wobei der Hebel zu einer Überlastverriegelung der Verstellvorrichtung das erste Verriegelungsmittel aufweist, wobei der Lenker oder der Sitzunterbau das zweite Verriegelungsmittel aufweist oder wobei ein Hebel mit einem Befestigungsmittel fest, jedoch um eine Drehachse drehbar mit dem Lenker verbunden ist, wobei der Hebel zu einer Überlastverriegelung der Verstellvorrichtung das erste Verriegelungsmittel aufweist, wobei der Sitzunterbau oder die Sitzstruktur das zweite Verriegelungsmittel aufweist.

Aus der EP 2 179 887 A1 ist ein Fahrzeugsitz bekannt, umfassend einen Sitzrahmen, umfassend einen unteren Rahmen, der mit Seitenrahmen verbunden ist. Ein Sitzrahmen ist mit dem unteren Rahmen verbunden. Eine Verbindungsstruktur ist entfernt von einem Rotationszentrum als ein Verbindungsabschnitt einer Endseite des Seitenrahmens zum unteren Rahmen ausgebildet. Die Verbindungsstruktur umfasst ein im Seitenrahmen gebildetes Langloch, das sich in einer Richtung von oben nach unten erstreckt, einen im unteren Rahmen gebildeten konvexen Abschnitt, eine Energieabsorptionsplatte und ein Führungsteil zum Führen der Eneergieabsorptionsplatte. Der konvexe Abschnitt und das Langloch sind relativ zueinander beweglich, wobei die Energieabsorptionsplatte plastisch deformiert wird, welche anliegend durch eine Sitzrahmenseite des konvexen Abschnitts gestützt wird und welche geklemmt zwischen dem konvexen Abschnitt und dem Führungsteil angeordnet ist.

Aus der WO 2008/017794 A2 ist eine Vorrichtung zur Energieabsorption, insbesondere für einen Kraftfahrzeugsitz bei einem Stoß, bekannt, wobei die Vorrichtung ein erstes Element im Wesentlichen in der Form einer Platte mit einem Loch und ein zweites Element eingefügt in der Bohrung umfasst, wobei das erste Element eine Reihe von Ausschnitten umfasst, die aufeinander folgend entlang einer Verformungsrichtung angeordnet sind und zwischen sich eine Reihe von Jochen definieren, die sich entlang einer Längsrichtung quer zur Verformungsrichtung erstrecken, wobei die Joche jeweils eine Länge entlang der Längsrichtung aufweisen, die sich von einem Joch zum nächsten stetig entsprechend dem Abstand der Joche in Bezug auf das zweite Element erhöht, wobei die Jochen insgesamt eine Konkavität in Richtung des zweiten Elements aufweisen.

Die nachveröffentlichte FR 2 943 957 A1 offenbart einen Sitz mit einer Rückenlehne, die durch Verbindungseinheiten mit einer Basis verbunden ist. Die Verbindungseinheiten umfassen einen Trennflansch, der direkt mit der Basis und einem Flansch der Rückenlehne mittels Befestigungseinheiten verbunden ist und in längliche Schlitze im Flansch der Rückenlehne eingreift. Die Schlitze sind so angeordnet, dass eine Bewegung der Befestigungseinheiten in den jeweiligen Schlitzen von einer vorderen Richtung in eine rückwärtige Richtung ein Schwenken der Rückenlehne in die vordere Richtung bewirkt.

Aufgabe der vorliegenden Erfindung ist es, einen Fahrzeugsitz mit verbesserten Eigenschaften hinsichtlich der Reduzierung der Kopfrückprallgeschwindigkeit bei einem Aufprallunfall anzugeben.

Die Aufgabe wird erfindungsgemäß durch einen Fahrzeugsitz mit den im Patentanspruch 1 angegebenen Merkmalen gelöst.

Die Aufgabe wird erfindungsgemäß mit einem Fahrzeugsitz mit einem Sitzteil und einer Rückenlehne, wobei das Sitzteil und die Rückenlehne mittels eines Verstellmechanismus relativ zueinander verstellbar sind, derart gelöst, dass eine den Verstellmechanismus aufnehmende Grundplatte mit einem Langloch versehen ist, das bei einem Aufprall auf das Heck des Fahrzeugs oder auf ein Heck eines vorausfahrenden Fahrzeugs infolge der Trägheit eines auf dem Fahrzeugsitz sitzenden Fahrzeuginsassen bewirkt, dass die Rückenlehne entgegen der Richtung der auf das Fahrzeug wirkenden Aufprallkraft begrenzt verstellt wird, so dass die aus dem Heckaufprall resultierende Beschleunigung des Fahrzeuginsassen zumindest reduziert wird.

Erfindungsgemäß ist das Langloch so ausgebildet, dass die Rückenlehne sich bei einem Aufprall eines Fahrzeugs, insbesondere einem Heckaufprall, unter der Krafteinwirkung des Fahrzeuginsassen, insbesondere seines Rückenbereiches begrenzt entgegen der Fahrtrichtung nach hinten verstellt. Der Weg dieser Verstellung wird durch die Länge des Langlochs vorgegeben. Durch ein Energieabsorptionselement in Gestalt einer verformbaren Lasche wird die beim Aufprall des Fahrzeuginsassen auf die Rückenlehne entstehende Aufprallenergie dabei zumindest teilweise absorbiert.

In einer weiteren Ausführungsform ist ein in die verformbare Lasche eingreifender rampenförmiger Mitnehmer vorgesehen, der an der zumindest partiellen Absorption der beim Aufprall des Fahrzeuginsassen entstehenden Aufprallenergie beteiligt ist.

In einer weiteren Ausführungsform können zwei verformbare, insbesondere stauchbare Laschen vorgesehen sein, die beim Aufprall des Fahrzeuginsassen auf die Rückenlehne entstehende Aufprallenergie zumindest teilweise absorbieren, so dass die Kopfrückprallgeschwindigkeit reduziert werden kann.

In einer weiteren Ausführungsform ist die verformbare Lasche an einem ersten Ende mittels des vorderen Befestigungsmittels zusammen mit der als Langloch ausgebildeten Durchgangsöffnung der Grundplatte am Sitzteil befestigt, wobei ein zweites Ende der Lasche in nahezu vertikaler Richtung ausgerichtet und mit dem Sitzteil verbunden ist, so dass die beim Aufprall des Fahrzeuginsassen auf die Rückenlehne entstehenden Aufprallenergie durch Dehnung der Lasche zumindest teilweise absorbiert wird.

Die Grundplatte kann auch derart ausgebildet sein, dass Toleranzen in nahezu horizontaler Ebene stärker ausgeglichen werden als in vertikaler Ebene. Dabei weist die Verschraubung jeweils mindestens zwei Durchgangsöffnungen in der Grundplatte und im Sitzteil auf, die derart ausgebildet sind, dass Toleranzen in nahezu horizontaler Ebene stärker ausgeglichen werden als in vertikaler Ebene.

Dazu ist erfindungsgemäß eine erste Durchgangsöffnung in der Grundplatte oder im Sitzteil als horizontal verlaufendes Langloch ausgebildet, dessen vertikale Ausdehnung, also seine Höhe, mit dem Durchmesser des Befestigungsmittels korrespondiert und nur geringfügig größer ist als dessen Durchmesser. Die kreisrund ausgebildete zweite Durchgangsöffnung weist einen Durchmesser auf, der mit dem Durchmesser des Befestigungsmittels korrespondiert und nur geringfügig größer ist als dessen Durchmesser.

Die Kompensation von Toleranzen, insbesondere Bauteiltoleranzen, wird dabei durch die Länge des Langlochs in der Grundplatte oder dem Sitzteil vorgegeben. Die Höhe des Langlochs und somit dessen Ausdehnung in vertikaler Richtung entspricht dabei im Wesentlichen dem vorgegebenen Nennmaß für das eingreifende Befestigungsmittel. Durch die Implementierung eines solchen Langloches mit einem größeren Ausgleich von Toleranzen in horizontaler Ebene als in vertikaler Ebene sind unerwünschte Verdrehungen der Rückenlehne um die Schwenkachse weitgehend vermieden. Darüber hinaus werden Verdrehungen der Rückenlehne bei einem Heckaufprall möglichst gering gehalten.

Auf diese Weise wird eine besonders steife Auslegung der Anbindung von Rückenlehne und Sitzteil erreicht.

Ausführungsbeispiele der Erfindung werden im Folgenden anhand von Zeichnungen näher erläutert.

Dabei zeigen:
- Fig. 1: schematisch einen vergrößerten Ausschnitt eines Fahrzeugsitzes im Bereich eines nicht erfindungsgemäßen Verstellmechanismus und einer Befestigung des Verstellmechanismus,
- Fig. 2: schematisch den Fahrzeugsitz gemäß Figur 1 mit einer im Bereich des Verstellmechanismus angeordneten Lasche,
- Fig. 3: schematisch eine Schnittdarstellung des Verstellmechanismus mit Lasche gemäß Figur 2 entlang der Linie III,
- Fig. 4: schematisch eine Schnittdarstellung des Verstellmechanismus gemäß Figur 2 entlang der Linie IV,
- Fig. 5: schematisch eine Schnittdarstellung einer zweiten, nicht erfindungsgemäßen Ausführungsform des Verstellmechanismus mit Lasche gemäß Figur 2 entlang der Linie III,
- Fig. 6: schematisch eine Schnittdarstellung der zweiten Ausführungsform des Verstellmechanismus gemäß Figur 2 entlang der Linie IV,
- Fig. 7: schematisch den Fahrzeugsitz gemäß Figur 1 mit einer dritten, nicht erfindungsgemäßen Ausführungsform des Verstellmechanismus mit zwei im Bereich des Verstellmechanismus angeordneten Laschen,
- Fig. 8: schematisch eine Schnittdarstellung der dritten Ausführungsform des Verstellmechanismus mit zwei Laschen gemäß Figur 7 entlang der Linie III,
- Fig. 9: schematisch einen erfindungsgemäßen Fahrzeugsitz mit einer vierten Ausführungsform eines Verstellmechanismus und einer Befestigung für diesen Verstellmechanismus,
- Fig. 10: schematisch einen vergrößerten Ausschnitt des Fahrzeugsitzes gemäß Figur 9 im Bereich der Befestigung mit einem Langloch zum Ausgleich von Bauteiltoleranzen,
- Fig. 11: eine perspektivische Ansicht eines vergrößerten Ausschnitts des erfindungsgemäßen Fahrzeugsitzes mit einer fünften Ausführungsform des Verstellmechanismus,
- Fig. 12: eine perspektivische Ansicht einer Grundplatte des Verstellmechanismus gemäß der fünften Ausführungsform.

Einander entsprechende Teile sind in allen Figuren mit den gleichen Bezugszeichen versehen.

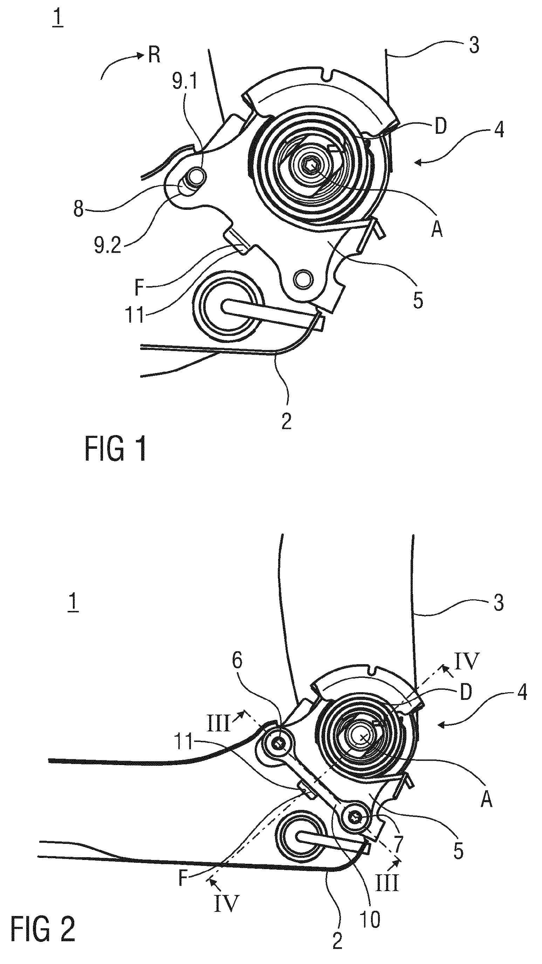

Die Figur 1 zeigt schematisch in einer Seitenansicht einen vergrößerten Ausschnitt eines Fahrzeugsitzes 1 mit einem Sitzteil 2 und einer Rückenlehne 3, die vorderseitig eine Abstützfläche für den Rücken eines Fahrzeuginsassen aufweist. Der Ausschnitt zeigt den Fahrzeugsitz 1 im Bereich eines nicht erfindungsgemäßen Verstellmechanismus 4, der eine Schwenkbewegung der Rückenlehne 3 relativ zum Sitzteil 2 ermöglicht. Die Rückenlehne 3 kann darüber hinaus in nicht näher dargestellter Art und Weise mit einer Kopfstütze, die starr oder relativ verschwenkbar zur Rückenlehne 3 angeordnet ist, versehen sein.

Das Sitzteil 2 und die Rückenlehne 3 sind mittels des insbesondere arretierbaren Verstellmechanismus 4 relativ zueinander verstellbar. Der Verstellmechanismus 4 umfasst zumindest eine Drehfeder D, die im Bereich einer Schwenkachse A der Rückenlehne 3 einerseits an dieser und andererseits am Sitzteil 2 angreift, wodurch die Rückenlehne 3 verspannt in einer vorgebbaren Position angeordnet und in dieser Position arretierbar ist, so dass eine definierte Abstützfläche für den Rücken eines Fahrzeuginsassen gebildet ist.

Im Normalbetrieb sind das Sitzteil 2 und die Rückenlehne 3 starr miteinander gekoppelt. Durch Lösen einer Arretierung kann die Rückenlehne 3 entgegen oder mit der Federkraft der Drehfeder D in eine für den auf dem Fahrzeugsitz 1 sitzenden Fahrzeuginsassen bequeme Position gestellt und in dieser Position arretiert werden. Beispielsweise kann zur Verstellung der Rückenlehne 3 ein nicht näher dargestelltes herkömmliches Handrad vorgesehen sein. Mittels der Arretierung ist ein Verkippen der Rückenlehne 3 nach vorne oder hinten im Normalbetrieb verhindert.

Der Verstellmechanismus 4 umfasst eine Grundplatte 5, auf welcher die Drehfeder D befestigt ist. Die Grundplatte 5 ist mittels zumindest eines Paares von Befestigungsmitteln 6 und 7, z. B. Schrauben, an dem Sitzteil 2 befestigt (in Figur 2 dargestellt).

Dabei weist die Grundplatte 5 ein Langloch 8 auf, das eine heckaufprallbedingte Verdrehung der Rückenlehne 3 ermöglicht. Das Langloch 8 bildet dabei die Durchgangsbohrung zur Aufnahme eines, insbesondere des in Fahrtrichtung gesehen vorderen Befestigungsmittels 6. Das Langloch 8 ist geradlinig ausgeführt und verläuft senkrecht zur Fahrtrichtung von oben nach unten.

Alternativ kann das Langloch 8 bogenförmig, insbesondere als ein Kreisringsegment ausgeführt sein. Das vordere Befestigungsmittel 6 ist derart in das Langloch 8 eingeführt und dort befestigt, dass es gegen eines der Anschlagenden 9.1, 9.2, insbesondere des in Fahrtrichtung gesehen hinteren oberen Anschlagende 9.1 des Langlochs 8 anschlägt.

Bei einem Aufprall auf das Heck des Fahrzeugs ermöglicht das Langloch 8 infolge der Trägheit eines auf dem Fahrzeugsitz 1 sitzenden Fahrzeuginsassen, dass die Rückenlehne 3 in Richtung des Pfeils R, entgegen der Richtung der auf das Fahrzeug wirkenden Aufprallkraft, begrenzt verstellt wird. Die Verstellbewegung wird dabei durch die Länge des Langlochs 8 festgelegt. Bei einem bogenförmigen Langloch entspricht die Schwenkbewegung im Wesentlichen dem Drehwinkel des bogenförmigen Langlochs.

Das vordere Befestigungsmittel 6 schlägt beim Heckaufprall gegen das vordere untere Anschlagende 9.2 des Langlochs 8 an, so dass die Bewegung der Rückenlehne 3 begrenzt ist.

Durch eine solche begrenzte Verstellbewegung der Rückenlehne 3 in Richtung des Pfeils R, entgegen der Richtung der auf das Fahrzeug wirkenden Aufprallkraft, wird eine definierte Verstellung der Rückenlehne 3 ermöglicht, in deren Verlauf zumindest ein Teil der heckaufprallbedingten Energie absorbiert werden kann.

Hierzu ist eine Lasche 10 als Energieabsorptionselement vorgesehen. Figur 2 zeigt den Verstellmechanismus 4 gemäß Figur 1 mit einer solchen Lasche 10. Die Lasche 10 verbindet die beiden Befestigungsmittel 6 und 7.

Die Lasche 10 dient bei einem Aufprall der plastischen Verformung und somit einer Energieaufnahme. Durch Aufnahme der beim Aufprall entstehenden Energie durch plastische Verformung kann auch die Kopfrückprallgeschwindigkeit reduziert werden.

Hierzu ist die Grundplatte 5 mit einem Mitnehmer 11 versehen. Auch können die Grundplatte 5 und der Mitnehmer 11 als ein Formteil ausgebildet sein.

Der Mitnehmer 11 ist an der unteren Seite der Grundplatte 5 mittig angeordnet. Der Mitnehmer 11 weist eine Rampe F auf, die eine schräge Ebene bildet. Die Rampe F des Mitnehmers 11 ist mit einem vorgegebenen Winkel zur Plattenebene der Grundplatte 5 ausgebildet. Beispielsweise ist die Rampe F mit einem Winkel von 45° angeordnet.

Im Falle eines Heckaufpralls und infolge der daraus resultierenden begrenzten Bewegung der Grundplatte 5 mit dem die Rampe F aufweisenden Mitnehmer 11 entlang des Langlochs 8 drückt die Rampe F des Mitnehmers 11 gegen die Lasche 10 und nimmt diese nach oben oder normal zur Plattenebene der Grundplatte 5 derart mit, dass die Lasche 10 plastisch verformt, insbesondere verbogen wird.

Durch eine solche Absorption der beim Aufprall entstehenden Energie infolge einer plastischen Verformung während einer definierten Verstellbewegung und Reduzierung der Kopfrückprallgeschwindigkeit kann einem Schleudertrauma entgegen gewirkt werden.

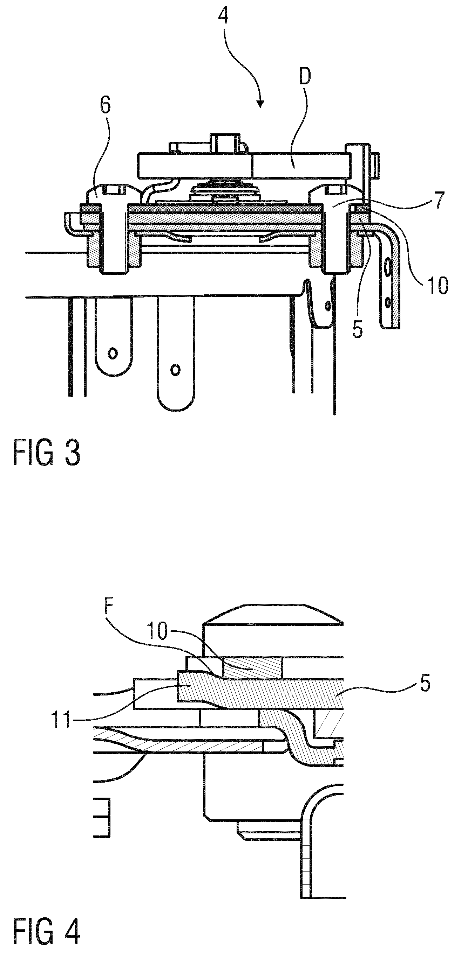

Figur 3 zeigt schematisch eine Schnittdarstellung des Verstellmechanismus 4 gemäß Figur 2 entlang der Linie III.

Figur 4 zeigt schematisch eine Schnittdarstellung des Verstellmechanismus 4 gemäß Figur 2 entlang der Linie IV.

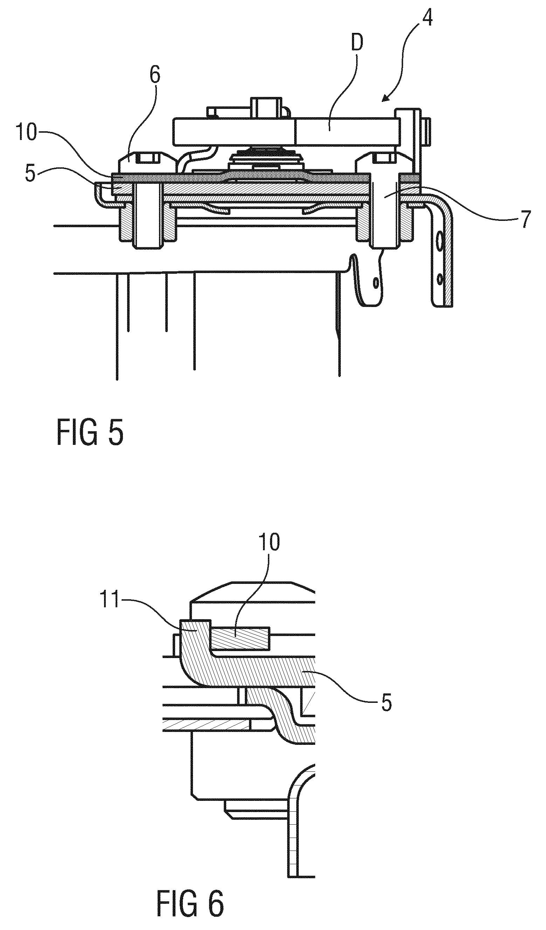

Figur 5 zeigt schematisch eine Schnittdarstellung einer zweiten, nicht erfindungsgemäßen Ausführungsform des Verstellmechanismus 4 gemäß Figur 2 entlang der Linie III.

Figur 6 zeigt schematisch eine Schnittdarstellung der zweiten Ausführungsform des Verstellmechanismus 4 gemäß Figur 2 entlang der Linie IV.

Die zweite Ausführungsform stimmt in den meisten Merkmalen mit der in den Figuren 1 bis 4 gezeigten Ausführungsform überein.

Abweichend steht in der zweiten Ausführungsform der Mitnehmer 11 als eine fahnenartige Verlängerung von der Grundplatte 5 ab, wobei die Verlängerung mit einem vorgegebenen Winkel zur Plattenebene der Grundplatte 5 abgewinkelt ist.

Im Falle eines Heckaufpralls und infolge der daraus resultierenden begrenzten Bewegung der Grundplatte 5 mit dem Mitnehmer 11 entlang des Langlochs 8 drückt der Mitnehmer 11 gegen die Lasche 10 und nimmt diese entlang der Plattenebene der Grundplatte 5 derart mit, dass die Lasche 10 plastisch verformt, insbesondere verbogen wird.

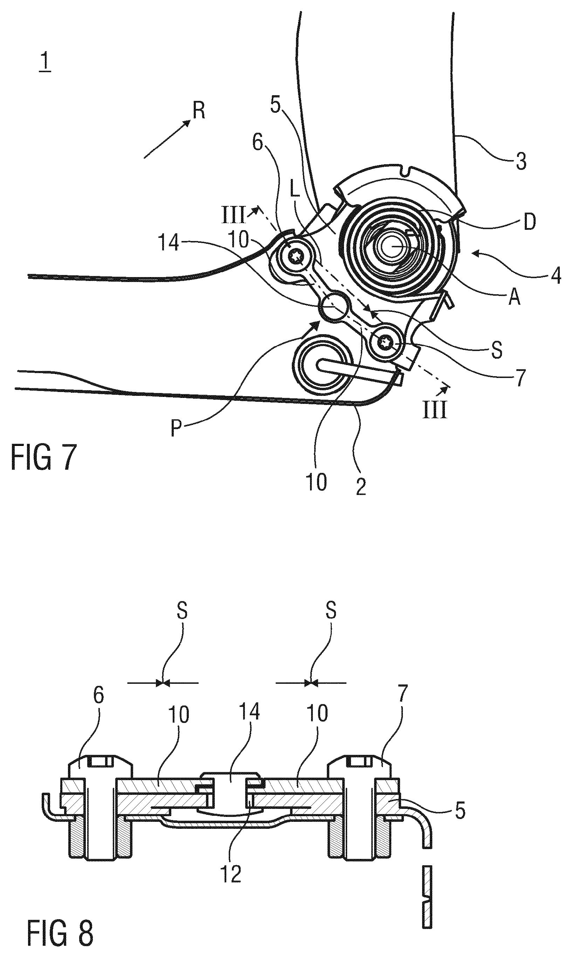

Figur 7 zeigt schematisch den Fahrzeugsitz gemäß Figur 1 mit einer dritten, nicht erfindungsgemäßen Ausführungsform des Verstellmechanismus 4 mit zwei im Bereich des Verstellmechanismus 4 angeordneten Laschen 10.

Figur 8 zeigt schematisch eine Schnittdarstellung der dritten Ausführungsform des Verstellmechanismus 4 mit den zwei Laschen 10 gemäß Figur 7 entlang der Linie III.

Die dritte Ausführungsform stimmt in den meisten Merkmalen mit den in den Figuren 1 bis 6 gezeigten Ausführungsformen überein.

In der dritten Ausführungsform kann zur Verstellung der Rückenlehne 3 ein nicht näher dargestelltes herkömmliches Handrad oder ein Hebel vorgesehen sein.

Die Grundplatte 5 weist zumindest ein erstes Langloch 8 auf, das eine heckaufprallbedingte Verdrehung der Rückenlehne 3 ermöglicht. Das erste Langloch 8 bildet dabei die Durchgangsbohrung zur Aufnahme eines, insbesondere des in Fahrtrichtung gesehen vorderen Befestigungsmittels 6. Das erste Langloch 8 ist geradlinig ausgeführt und verläuft senkrecht zur Fahrtrichtung von unten nach oben. Alternativ kann das Langloch 8 bogenförmig als ein Kreisringsegment ausgeführt sein. Das vordere Befestigungsmittel 6 ist derart in das erste Langloch 8 eingeführt und dort befestigt, dass es gegen eines der Anschlagenden 9.1, insbesondere des in Fahrtrichtung gesehen hinteren oberen Anschlagendes 9.1 des ersten Langlochs 8 anschlägt.

Bei einem Aufprall auf das Heck des Fahrzeugs ermöglicht das erste Langloch 8 infolge der Trägheit eines auf dem Fahrzeugsitz 1 sitzenden Fahrzeuginsassen, dass die Rückenlehne 3 in Richtung des Pfeils R entgegen der Richtung der auf das Fahrzeug wirkenden Aufprallkraft begrenzt verstellt wird. Die Verstellbewegung wird dabei durch die Länge des ersten Langlochs 8 festgelegt. Bei einem bogenförmigen Langloch entspricht die Schwenkbewegung im Wesentlichen dem Drehwinkel des bogenförmigen Langlochs.

Das vordere Befestigungsmittel 6 schlägt beim Heckaufprall gegen das vordere untere Anschlagende 9.2 des ersten Langlochs 8 an, so dass die Bewegung der Rückenlehne 3 begrenzt ist.

Durch eine solche begrenzte Verstellbewegung der Rückenlehne 3 in Richtung des Pfeils R entgegen der Richtung der auf das Fahrzeug wirkenden Aufprallkraft wird eine definierte Verstellung der Rückenlehne 3 ermöglicht, in deren Verlauf zumindest ein Teil der heckaufprallbedingten Energie absorbiert werden kann.

Hierzu sind zwei Laschen 10 als Energieabsorptionsanordnung vorgesehen. Figur 8 zeigt den Verstellmechanismus 4 gemäß Figur 7 mit zwei solchen Laschen 10. Die Laschen 10 sind an ihren gegenüberliegenden Enden jeweils mittels der Befestigungsmittel 6 und 7 an der Grundplatte 5 befestigt und verbinden die beiden Befestigungsmittel 6 und 7. Die anderen Enden der Laschen 10 sind mittig zwischen den Befestigungsmitteln 6 und 7 übereinander angeordnet und mittels eines Befestigungsbolzens 14 an der Grundplatte 5 befestigt.

Die Laschen 10 dienen bei einem Aufprall der plastischen Verformung insbesondere durch Stauchung und somit einer Energieaufnahme. Durch Aufnahme der beim Aufprall entstehenden Energie durch plastische Verformung kann auch die Kopfrückprallgeschwindigkeit reduziert werden.

Hierzu ist die Grundplatte 5 im Detail mit einem zweiten Langloch 12 versehen, in welchem der Befestigungsbolzen 14 gehalten ist. Wie in Figur 8 dargestellt, ist das zweite Langloch 12 geradlinig ausgebildet und verläuft im Wesentlichen parallel zur Fahrtrichtung. Das zweite Langloch 12 ist mittig in der Grundplatte 5 als eine Durchgangsbohrung eingebracht. Die beiden Laschen 10 weisen an ihren freien Enden Durchgangsöffnungen auf, die auf dem zweiten Langloch 12 übereinander angeordnet sind, so dass der Befestigungsbolzen 14 über die Durchgangsöffnungen der beiden Laschen 10 in das zweite Langloch 12 eingreifen kann.

Im Falle eines Heckaufpralls und infolge der daraus resultierenden begrenzten Bewegung der Grundplatte 5 entlang des ersten Langlochs 8 drückt der Befestigungsbolzen 14 gegen die freien Enden der beiden Laschen 10, wie durch den wirkenden Kraftpfad P dargestellt, und nimmt diese entlang der Plattenebene der Grundplatte 5 und senkrecht zur Fahrtrichtung derart mit, dass die Laschen 10 plastisch verformt, insbesondere gestaucht werden, wie anhand der Stauchrichtung S dargestellt.

Dabei werden die Laschen 10 bis zur Totpunktlinie L bewegt und dabei in Stauchrichtung S gestaucht, wodurch die Rückenlehne 3 gedämpft bis zum Anschlagende 9.2 des ersten Langlochs 8 verstellt wird und anschlägt.

Die Laschen 10 dienen demzufolge bei einem Heckaufprall der plastischen Verformung und somit einer Energieaufnahme. Dabei werden die Laschen 10 bei Auslenkung der Rückenlehne 3 infolge eines Heckaufpralls auf das Fahrzeug in gleiche Richtung wie die Auslenkung der Rückenlehne 3 in Richtung des Pfeils R mitgenommen. Hierbei werden die beiden Laschen 10 gestaucht und verformt. Insbesondere werden die beiden Laschen 10 derart verformt, bis diese die vorgegebene Totpunktlinie L erreicht haben, wobei die Rückenlehne 3 weiter bis zum Anschlag des Befestigungsmittels 6 am Anschlagende 9.1 des ersten Langlochs 8 geschwenkt wird.

Durch Aufnahme der beim Heckaufprall entstehenden Energie durch plastische Verformung während einer definierten Verstellbewegung der Rückenlehne 3 wird die Kopfrückprallgeschwindigkeit reduziert und kann einem Schleudertrauma entgegen gewirkt werden.

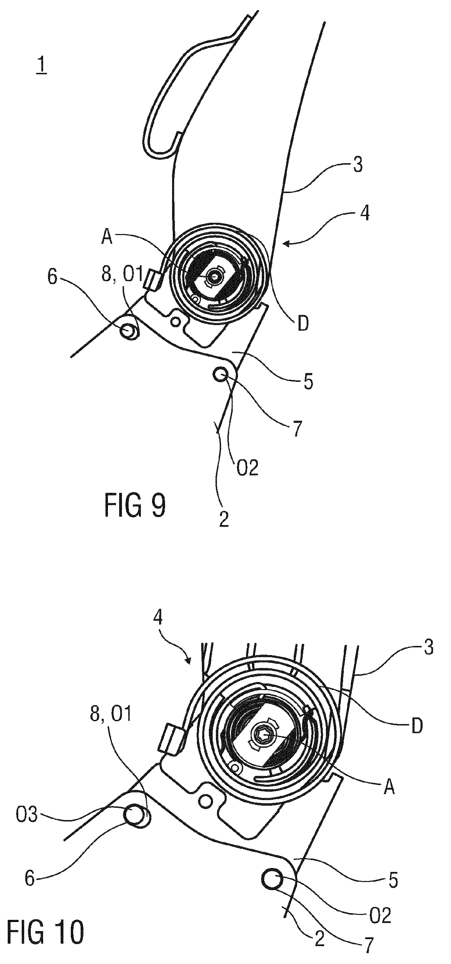

Figur 9 zeigt schematisch einen Fahrzeugsitz 1 mit einer vierten Ausführungsform eines Verstellmechanismus 4 und einer Befestigung für diesen Verstellmechanismus 4.

Der Verstellmechanismus 4 umfasst eine Grundplatte 5, auf welcher die Drehfeder D befestigt ist. Die Grundplatte 5 ist mittels zumindest eines Paares von Befestigungsmitteln 6 und 7, z. B. Schrauben, an dem Sitzteil 2 befestigt.

Zur Aufnahme der Befestigungsmittel 6, 7 weist die Grundplatte 5 zwei Durchgangsöffnungen O1, O2 auf, von denen eine erste Durchgangsöffnung 01 als ein Langloch 8 ausgeführt ist. Die Durchgangsöffnungen 01, 02 sind in nahezu horizontaler Ebene nebeneinander angeordnet.

Das Langloch 8 verläuft dabei in horizontaler Ebene und somit in einer Ebene mit den zwei Durchgangsöffnungen 01 und 02. Die vertikale Ausdehnung des Langlochs 8, also seine Höhe, korrespondiert mit dem Durchmesser des Befestigungsmittels 6 und ist somit passgenau, insbesondere nur geringfügig größer als der Durchmesser des Befestigungsmittels 6 ausgeführt.

Die zweite Durchgangsöffnung 02 ist kreisrund ausgebildet und weist einen Durchmesser auf, der mit dem Durchmesser des Befestigungsmittels 7 korrespondiert. Die zweite Durchgangsöffnung 02 ist somit passgenau und nur geringfügig größer als der Durchmesser des Befestigungsmittels 7 ausgeführt.

Das heißt, die mindestens zwei Durchgangsöffnungen 01, 02 in der Grundplatte 5 mit der als Langloch 8 ausgebildeten ersten Durchgangsöffnung O1 sind derart ausgebildet, dass Toleranzen in nahezu horizontaler Ebene stärker ausgeglichen werden als in vertikaler Ebene.

Alternativ zur Ausbildung der ersten Durchgangsöffnung 01 als Langloch 8 in der Grundplatte 5 kann eine zu der ersten Durchgangsöffnung 01 korrespondierende dritte Durchgangsöffnung 03 des Sitzteils 2 als Langloch ausgeführt sein (nicht dargestellt).

In einer Weiterbildung ist entweder die erste Durchgangsöffnung 01 der Grundplatte 5 oder die zu dieser korrespondierende dritte Durchgangsöffnung 03 des Sitzteils 2 mit einem Gewinde zur Aufnahme des Befestigungsmittels 6, einer Schraube, versehen. Das Langloch 8 ist bevorzugt in der Durchgangsöffnung 01 oder 03 ausgebildet, die gewindefrei ausgeführt ist.

Die Länge des Langlochs 8 gibt dabei die Größe der Kompensation von Toleranzen, insbesondere Bauteiltoleranzen vor. Die Höhe des Langlochs 8 und somit dessen Ausdehnung in vertikaler Richtung entspricht dabei im Wesentlichen dem vorgegebenen Nennmaß für das eingreifende Befestigungsmittel 6.

Durch die Implementierung eines solchen Langloches 8, entweder in der Grundplatte 5 oder im Sitzteil 2 mit einem größeren Ausgleich von Toleranzen in horizontaler Ebene als in vertikaler Ebene, sind unerwünschte Verdrehungen der Rückenlehne 3 um die Schwenkachse A weitgehend vermieden.

Bei einem Aufprall auf das Heck des Fahrzeugs ermöglicht das Langloch 8 infolge der Trägheit eines auf dem Fahrzeugsitz 1 sitzenden Fahrzeuginsassen, dass die Rückenlehne 3 infolge der passgenauen Auslegung der ersten Durchgangsöffnung O1 in vertikaler Richtung und somit in Wirk- oder Auslenkrichtung begrenzt, insbesondere nur geringfügig oder gar nicht auslenkbar ist.

Figur 10 zeigt schematisch einen vergrößerten Ausschnitt des Fahrzeugsitzes 1 gemäß Figur 9 im Bereich der Befestigung mit einem Langloch 8 in der Grundplatte 5 zum Ausgleich von Bauteiltoleranzen.

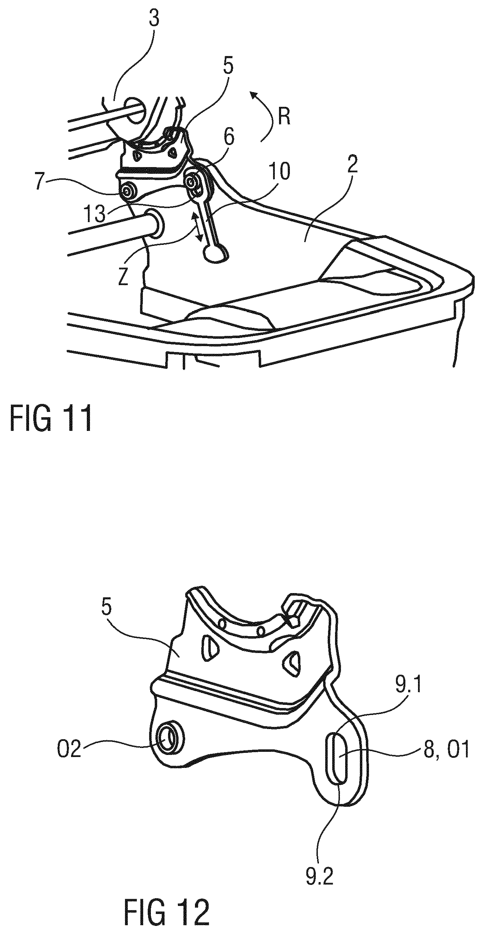

Figur 11 zeigt eine perspektivische Ansicht eines vergrößerten Ausschnitts des Fahrzeugsitzes 1 mit einer fünften Ausführungsform des Verstellmechanismus 4 und einer Befestigung für diesen Verstellmechanismus 4.

Der Verstellmechanismus 4 umfasst eine Grundplatte 5. Die Grundplatte 5 ist mittels zumindest eines Paares von Befestigungsmitteln 6 und 7, z. B. Schrauben, an dem Sitzteil 2 befestigt.

Zur Aufnahme der Befestigungsmittel 6, 7 weist die Grundplatte 5 zwei Durchgangsöffnungen O1, O2 auf, von denen eine erste Durchgangsöffnung O1 als ein Langloch 8 ausgeführt ist. Die Durchgangsöffnungen O1, O2 sind in nahezu horizontaler Ebene nebeneinander angeordnet. Figur 12 zeigt eine perspektivische Ansicht der Grundplatte 5.

Das Langloch 8 verläuft dabei in vertikaler Ebene. Die horizontale Ausdehnung des Langlochs 8, also seine Breite, korrespondiert mit dem Durchmesser des Befestigungsmittels 6 und ist somit passgenau, insbesondere nur geringfügig größer als der Durchmesser des Befestigungsmittels 6 ausgeführt.

Die zweite Durchgangsöffnung O2 ist kreisrund ausgebildet und weist einen Durchmesser auf, der mit dem Durchmesser des Befestigungsmittels 7 korrespondiert. Die zweite Durchgangsöffnung O2 ist somit passgenau und nur geringfügig größer als der Durchmesser des Befestigungsmittels 7 ausgeführt.

Das heißt, die mindestens zwei Durchgangsöffnungen O1, O2 in der Grundplatte 5 mit der als Langloch 8 ausgebildeten ersten Durchgangsöffnung O1 sind derart ausgebildet, dass eine Auslenkung der Rückenlehne 3 entgegen der Fahrtrichtung, also nach hinten nach einem Kopfaufprall möglich ist.

Alternativ zur Ausbildung der ersten Durchgangsöffnung O1 als Langloch 8 in der Grundplatte 5 kann eine zu der ersten Durchgangsöffnung O1 korrespondierende dritte Durchgangsöffnung O3 des Sitzteils 2 als Langloch ausgeführt sein (nicht dargestellt).

In einer Weiterbildung ist entweder die erste Durchgangsöffnung O1 der Grundplatte 5 oder die zu dieser korrespondierende dritte Durchgangsöffnung O3 des Sitzteils 2 mit einem Gewinde zur Aufnahme des Befestigungsmittels 6, einer Schraube, versehen. Das Langloch 8 ist bevorzugt in der Durchgangsöffnung O1 oder O3 ausgebildet, die gewindefrei ausgeführt ist.

Weiter ist eine Lasche 10 vorgesehen, welche an einem ersten Ende mittels des vorderen Befestigungsmittels 6 zusammen mit der Durchgangsöffnung O1 der Grundplatte 5 am Sitzteil 2 befestigt, insbesondere verschraubt ist.

Ein zweites Ende der Lasche 10 ist in nahezu vertikaler Richtung ausgerichtet und mit dem Sitzteil 2 verbunden, beispielsweise verschweißt, verschraubt oder formschlüssig eingehängt. Die Lasche 10 wird im Falle eines Heckaufpralls und der dadurch bedingten Auslenkung der Rückenlehne 3 entgegen der Fahrtrichtung in einer durch den Pfeil R bezeichneten Rotationsrichtung auf Zug beansprucht und dabei durch Dehnung in einer Zugrichtung Z plastisch verformt, so dass sie zumindest einen Teil der Aufprallenergie aufnimmt.

Das erste Ende der Lasche 10 kann ein drittes Langloch 13 zur Aufnahme des Befestigungsmittels 6 aufweisen.

Die im Verstellmechanismus 4 beschriebene Drehfeder D ist ein nicht einschränkendes Beispiel für ein Verstellmittel. Ebenso können andere Verstellmittel, beispielsweise ein Elektromotor, vorgesehen sein.

### Bezugszeichenliste

- 1: Fahrzeugsitz
- 2: Sitzteil
- 3: Rückenlehne
- 4: Verstellmechanismus
- 5: Grundplatte
- 6: vorderes Befestigungsmittel
- 7: Befestigungsmittel
- 8: Langloch, erstes Langloch
- 9.1, 9.2: Anschlagenden des Langlochs,
- 10: Lasche
- 11: Mitnehmer,
- 12: zweites Langloch
- 13: drittes Langloch
- 14: Befestigungsbolzen

- A: Schwenkachse
- D: Drehfeder
- F: Rampe
- L: Totpunktlinie
- O1 bis O3: Durchgangsöffnungen
- P: Kraftpfad
- R: Pfeil
- S: Stauchrichtung
- Z: Zugrichtung

## Patentansprüche

1. Fahrzeugsitz (1) mit einem Sitzteil (2) und einer Rückenlehne (3), wobei das Sitzteil (2) und die Rückenlehne (3) mittels eines Verstellmechanismus (4) relativ zueinander verstellbar sind, wobei eine den Verstellmechanismus (4) aufnehmende Grundplatte (5) vorgesehen ist, wobei die Grundplatte (5) mindestens zwei Durchgangsöffnungen (01 bis 03) aufweist, durch die die Grundplatte (5) mittels jeweils eines Befestigungsmittels (6, 7) mit dem Sitzteil (2) verbunden ist,
wobei die Durchgangsöffnungen (01 bis 03)
in nahezu horizontaler Ebene nebeneinander angeordnet sind,
wobei
eine der Durchgangsöffnungen (O1) als ein Langloch (8) ausgebildet ist, und wobei das Langloch (8)
waagerecht in Fahrtrichtung oder bogenförmig verläuft und senkrecht zur Fahrtrichtung passgenau mit dem Durchmesser des Befestigungsmittels (6, 7) korrespondiert, derart, dass Toleranzen in horizontaler Ebene größer ausgeglichen werden als Toleranzen in vertikaler Ebene, wobei mindestens ein Energieabsorptionselement in Gestalt einer Lasche (10) vorgesehen ist, die an mindestens einem der Befestigungsmittel (6, 7) derart befestigt ist, dass die Lasche (10) sich beim Heckaufprall infolge der begrenzten Verstellbewegung plastisch verformt.

2. Fahrzeugsitz (1) nach Anspruch 1,
**dadurch gekennzeichnet, dass** das Langloch (8) die Durchgangsbohrung des in Fahrtrichtung gesehen vorderen Befestigungsmittels (6) bildet.

3. Fahrzeugsitz (1) nach Anspruch 1 oder 2,
**dadurch gekennzeichnet, dass** die Lasche (10) die beiden Befestigungsmittel (6, 7) verbindet, wobei an einer Unterseite der Grundplatte (5) ein Mitnehmer (11) vorgesehen ist, der infolge der begrenzten Verstellbewegung die Lasche (10) nach oben oder normal zu einer Plattenebene der Grundplatte (5) derart mitnimmt, dass die Lasche (10) verbogen wird.

4. Fahrzeugsitz (1) nach Anspruch 3,
**dadurch gekennzeichnet, dass** der Mitnehmer (11) eine Rampe (F) aufweist, die eine schräge Ebene zur Plattenebene der Grundplatte (5) bildet.

5. Fahrzeugsitz (1) nach Anspruch 3,
**dadurch gekennzeichnet, dass** der Mitnehmer (11) als eine fahnenartige Verlängerung mit einem vorgegebenen Winkel zur Plattenebene von der Grundplatte (5) abgewinkelt ist.

6. Fahrzeugsitz (1) nach Anspruch 1,
**dadurch gekennzeichnet, dass** zwei Laschen (10) vorgesehen sind, die an ihren gegenüberliegenden Enden jeweils mittels der Befestigungsmittel (6, 7) an der Grundplatte (5) befestigt sind, wobei die anderen Enden der Laschen (10) mittig zwischen den Befestigungsmitteln (6, 7) übereinander angeordnet und mittels eines Befestigungsbolzens (14) in einem zweiten Langloch (12) an der Grundplatte (5) befestigt sind, wobei das zweite Langloch (12) im Wesentlichen parallel zu der Fahrtrichtung verläuft.

7. Fahrzeugsitz (1) nach Anspruch 1,
**dadurch gekennzeichnet, dass** die Lasche (10) an einem ersten Ende mittels des vorderen Befestigungsmittels (6) zusammen mit der als Langloch (8) ausgebildeten Durchgangsöffnung (01) der Grundplatte (5) am Sitzteil (2) befestigt ist, wobei ein zweites Ende der Lasche (10) in nahezu vertikaler Richtung ausgerichtet und mit dem Sitzteil (2) verbunden ist.

8. Fahrzeugsitz (1) nach Anspruch 7,
**dadurch gekennzeichnet, dass** das zweite Ende der Lasche (10) mit dem Sitzteil (2) verschweißt, verschraubt oder darin formschlüssig eingehängt ist.

9. Fahrzeugsitz (1) nach Anspruch 6 und nach einem der Ansprüche 7 oder 8,
**dadurch gekennzeichnet, dass** das erste Ende der Lasche (10) ein drittes Langloch (13) zur Aufnahme des Befestigungsmittels (6) aufweist.

10. Fahrzeugsitz (1) nach einem der vorhergehenden Ansprüche,
**dadurch gekennzeichnet, dass** die Befestigungsmittel (6, 7) als Schrauben ausgebildet sind.

## Claims

1. Vehicle seat (1) having a seat part (2) and a backrest (3), wherein the seat part (2) and the backrest (3) are adjustable relative to one another by means of an adjustment mechanism (4), wherein a base plate (5) receiving the adjustment mechanism (4) is provided, wherein the base plate (5) has at least two passage openings (01 to 03) through which the base plate (5) is connected to the seat part (2) by means of one respective fastening means (6, 7), wherein the passage openings (01 to 03) are arranged adjacent to one another in an approximately horizontal plane, wherein
one of the passage openings (01) is configured as a slot (8), and wherein the slot (8) extends horizontally in the direction of travel or in an arcuate manner and corresponds perpendicular to the direction of travel in a precisely fitting manner to the diameter of the fastening means (6, 7), such that tolerances are compensated for to a greater extent in the horizontal plane than tolerances in the vertical plane, wherein at least one energy absorption element is provided in the form of a link plate (10) which is fastened to at least one of the fastening means (6, 7), such that the link plate (10) is plastically deformed in the event of a rear impact as a result of the limited adjustment movement.

2. Vehicle seat (1) according to Claim 1, **characterized in that** the slot (8) forms the through-bore of the front fastening means (6) viewed in the direction of travel.

3. Vehicle seat (1) according to Claim 1 or 2, **characterized in that** the link plate (10) connects the two fastening means (6, 7), wherein a drive element (11) is provided on a lower face of the base plate (5), said drive element entraining the link plate (10) upward or vertically relative to a plate plane of the base plate (5) as a result of the limited adjustment movement, such that the link plate (10) is bent.

4. Vehicle seat (1) according to Claim 3, **characterized in that** the drive element (11) comprises a ramp (F) which forms an oblique plane relative to the plate plane of the base plate (5).

5. Vehicle seat (1) according to Claim 3, **characterized in that** the drive element (11) as a tablike extension is angled back at a predetermined angle from the plate plane of the base plate (5).

6. Vehicle seat (1) according to Claim 1, **characterized in that** two link plates (10) are provided, said link plates being fastened to the base plate (5) in each case at their opposing ends by means of the fastening means (6, 7), wherein the other ends of the link plates (10) are arranged on top of one another centrally between the fastening means (6, 7) and are fastened to the base plate (5) by means of a fastening pin (14) in a second slot (12), wherein the second slot (12) extends substantially parallel to the direction of travel.

7. Vehicle seat (1) according to Claim 1, **characterized in that** the link plate (10) at a first end is fastened to the seat part (2) by means of the front fastening means (6) together with the passage opening (01) of the base plate (5) configured as a slot (8), wherein a second end of the link plate (10) is aligned in an approximately vertical direction and is connected to the seat part (2).

8. Vehicle seat (1) according to Claim 7, **characterized in that** the second end of the link plate (10) is welded or screwed to the seat part (2) or positively suspended therein.

9. Vehicle seat (1) according to Claim 6 and according to either of Claims 7 or 8, **characterized in that** the first end of the link plate (10) has a third slot (13) for receiving the fastening means (6).

10. Vehicle seat (1) according to one of the preceding claims, **characterized in that** the fastening means (6, 7) are configured as screws.

## Revendications

1. Siège de véhicule (1) comprenant une partie de siège (2) et un dossier (3), la partie de siège (2) et le dossier (3) pouvant être réglés l'un par rapport à l'autre au moyen d'un mécanisme de réglage (4), une plaque de base (5) recevant le mécanisme de réglage (4) étant prévue, la plaque de base (5) présentant au moins deux ouvertures de passage (01 à 03), à travers lesquelles la plaque de base (5) est connectée à la partie de siège (2) par le biais d'un moyen de fixation respectif (6, 7),
les ouvertures de passage (01 à 03) étant disposées les unes à côté des autres dans un plan pratiquement horizontal, l'une des ouvertures de passage (01) étant réalisée sous forme de trou oblong (8) et le trou oblong (8) s'étendant horizontalement dans la direction de conduite ou sous forme courbe, et correspondant, perpendiculairement à la direction de conduite, de manière exacte au diamètre du moyen de fixation (6, 7) de telle sorte que les tolérances dans le plan horizontal soient davantage compensées que les tolérances dans le plan vertical, au moins un élément d'absorption d'énergie étant prévu sous la forme d'une patte (10) qui est fixée à au moins l'un des moyens de fixation (6, 7) de telle sorte que la patte (10) se déforme plastiquement en cas de collision par l'arrière sous l'effet du mouvement de réglage limité.

2. Siège de véhicule (1) selon la revendication 1, **caractérisé en ce que** le trou oblong (8) forme l'alésage traversant du moyen de fixation avant (6), vu dans la direction de conduite.

3. Siège de véhicule (1) selon la revendication 1 ou 2,
**caractérisé en ce que** la patte (10) relie les deux moyens de fixation (6, 7), un dispositif d'entraînement (11) étant prévu au niveau d'un côté inférieur de la plaque de base (5), lequel, du fait du mouvement de réglage limité, entraîne la patte (10) vers le haut ou perpendiculairement à un plan de plaque de la plaque de base (5) de telle sorte que la patte (10) soit fléchie.

4. Siège de véhicule (1) selon la revendication 3, **caractérisé en ce que** le dispositif d'entraînement (11) présente une rampe (F) qui forme un plan oblique par rapport au plan de plaque de la plaque de base (5).

5. Siège de véhicule (1) selon la revendication 3, **caractérisé en ce que** le dispositif d'entraînement (11) est coudé sous la forme d'un prolongement de type drapeau avec un angle prédéfini par rapport au plan de plaque de la plaque de base (5).

6. Siège de véhicule (1) selon la revendication 1, **caractérisé en ce que** deux pattes (10) sont prévues, lesquelles sont fixées à la plaque de base (5) par leurs extrémités opposées à chaque fois par le biais des moyens de fixation (6, 7), les autres extrémités des pattes (10) étant disposées centralement les unes au-dessus des autres entre les moyens de fixation (6, 7) et étant fixées à la plaque de base (5) au moyen d'un boulon de fixation (14) dans un deuxième trou oblong (12), le deuxième trou oblong (12) s'étendant essentiellement parallèlement à la direction de conduite.

7. Siège de véhicule (1) selon la revendication 1, **caractérisé en ce que** la patte (10) est fixée à la partie de siège (2) à une première extrémité par le biais du moyen de fixation avant (6) conjointement avec l'ouverture de passage (01) de la plaque de base (5) réalisée sous forme de trou oblong (8), une deuxième extrémité de la patte (10) étant orientée dans une direction pratiquement verticale et étant connectée à la partie de siège (2).

8. Siège de véhicule (1) selon la revendication 7, **caractérisé en ce que** la deuxième extrémité de la patte (10) est soudée ou vissée à la partie de siège (2) ou est accrochée par engagement par correspondance de formes dans celle-ci.

9. Siège de véhicule (1) selon la revendication 6 et selon l'une quelconque des revendications 7 ou 8, **caractérisé en ce que** la première extrémité de la patte (10) présente un troisième trou oblong (13) pour recevoir le moyen de fixation (6).

10. Siège de véhicule (1) selon l'une quelconque des revendications précédentes, **caractérisé en ce que** les moyens de fixation (6, 7) sont réalisés sous forme de vis.
